# FASCICULE DE BREVET EUROPEEN

(11) **EP 3 887 652 B1**
(45) Date de publication et mention de la délivrance du brevet: **27.08.2025**
(21) Numéro de dépôt: 19835694.1
(22) Date de dépôt: 28.11.2019
(51) Int. Cl.: F01D 25/00, F02C 7/22, F02C 7/232, F23K 5/18

(54) **PROCÉDÉ DE DÉTERMINATION DE DÉFAILLANCE D'UN CIRCUIT DE DRAINAGE D'UNE CHAMBRE DE COMBUSTION**
VERFAHREN ZUR BESTIMMUNG DES AUSFALLS EINES DRAINAGEKREISLAUFS FÜR EINE BRENNKAMMER
METHOD FOR DETERMINING THE FAILURE OF A DRAINAGE CIRCUIT FOR A COMBUSTION CHAMBER

(30) Priorité: 30.11.2018 FR 1872164
(43) Date de publication de la demande: 06.10.2021
(73) Titulaire: General Electric Technology GmbH, 5400 Baden (CH)
(72) Inventeur: ABOUJAIB, Maher, 90000 Belfort (FR); FAQIHI, Bouria, 90000 Belfort (FR); PENA, Ezio, 90000 Belfort (FR); CATRIN, Sven, 90000 Belfort (FR); COUTERET, Nicolas, 90000 Belfort (FR)
(74) Mandataire: Casalonga
(86) Numéro de dépôt international: PCT/FR2019/052833
(87) Numéro de publication internationale: WO 2020/109734

(56) Documents cités:
- EP-A1- 0 915 240
- US-A1- 2001 022 080
- US-A1- 2011 146 807
- US-A1- 2016 177 879
- US-A1- 2017 175 638

## Description

La présente invention concerne un procédé de détermination d'une défaillance d'un circuit de drainage d'au moins un fluide combustible pour une turbine, notamment à gaz.

Un circuit de drainage permet de manière générale évacuer le fluide combustible afin d'éviter tout risque d'incendie ou d'explosion notamment dans les chambres de combustion, les cavités de la turbine à gaz et l'échappement. Un circuit de drainage comprend une conduite d'évacuation et au moins une vanne d'isolation.

Une turbine à gaz comprend généralement plusieurs chambres de combustion ainsi qu'un système d'alimentation des chambres de combustion en fluide combustible.

Le système d'alimentation permet d'acheminer le fluide combustible, tel que du fioul liquide, depuis un système de stockage ou de distribution jusqu'aux chambres de combustion. Le système d'alimentation a pour fonction d'assurer les conditions requises de filtration, de pression, de température et débit du fluide combustible à l'alimentation des chambres de combustion. De plus, le système d'alimentation prévoit généralement des moyens pour assurer la fiabilité de l'alimentation en cas par exemple de contre pression provenant d'une chambre à combustion en utilisant des clapets antiretours en entrée des chambres de combustion, des systèmes de purge à l'eau permettant de limiter le risque de cokéfaction et un circuit de drainage du fluide combustible non brûlé lorsqu'il est injecté dans les chambres à combustion, notamment en cas de faux départ.

Le démarrage de la turbine à gaz peut ne pas se réaliser correctement ou la flamme de la chambre de combustion peut s'éteindre. Dans ces deux cas, le fluide combustible injecté dans la chambre de combustion peut ne pas être brûlé et donc s'accumuler dans les cavités, mentionnées ci-dessus, de la turbine à gaz. Une vérification du bon fonctionnement du ou des circuits de drainage doit être faite avant l'allumage de la turbine, ainsi le fluide combustible doit être évacué de ces cavités par un ou plusieurs circuit de drainage suite à un faux allumage et avant une nouvelle tentative de démarrage. Toutefois, il peut arriver que le fluide combustible reste piégé dans le circuit de drainage risquant ainsi de s'auto-enflammer en présence de haute température. Ceci peut notamment arriver lorsque le circuit de drainage est obstrué ou qu'une vanne de ce circuit est défaillante.

Il est connu de l'état de l'art, notamment du document US 2017/0175638 A1, d'installer une ou plusieurs vannes d'isolation dans le circuit de drainage.

Cependant, en cas de défaillance de la fermeture ou de l'ouverture des vannes d'isolation, le fluide combustible peut se trouver dans une zone de haute température ou provoquer une fuite permettant à de l'air chaud provenant des chambres de combustion de s'écouler à travers le circuit de drainage.

Le circuit de drainage des cavités permet d'évacuer aussi bien du fluide combustible liquide, par exemple du fioul, en cas de faux départ ou de l'eau de lavage. Or, l'eau de lavage peut transporter des résidus solides de la combustion et éventuellement boucher totalement ou partiellement le circuit de drainage de la cavité, voire perturber la fermeture de vannes d'isolation. Ainsi, il est important de pouvoir détecter ces différents types de défaillances possibles, notamment l'ouverture et/ou fermeture de vannes en plus d'une éventuelle obstruction de la ligne du drain.

Il est également connu des documents US 2016/177879 A1 et EP 0 915 240 A1 des turbines à combustible comprenant un système de purge.

En particulier, EP 0 915 240 A1 divulgue un procédé de détermination d'une défaillance pour un circuit de drainage d'au moins un fluide combustible pour au moins une cavité d'une turbine, ledit circuit de drainage comprenant un drain en communication de fluide avec ladite au moins une cavité; une première et une deuxième vannes d'isolation délimitant entre elles une cavité d'isolation d'une portion du drain, une conduite d'évacuation en communication de fluide avec la cavité d'isolation pour permettre l'évacuation d'eau hors de la cavité d'isolation; une conduite d'alimentation pour permettre l'alimentation en fluide sous pression de la cavité d'isolation; une vanne d'alimentation disposée dans la conduite d'alimentation pour réguler l'alimentation de la cavité d'isolation en fluide sous pression; un dispositif de détermination d'une défaillance du circuit de drainage comprenant au moins un capteur pour déterminer la pression à l'intérieur de la cavité d'isolation ledit procédé comprenant les étapes suivantes : fermer les première et deuxième vannes d'isolation pour isoler la cavité d'isolation du reste du drain; ouvrir la vanne d'alimentation pour injecter du fluide sous pression à l'intérieur de la cavité d'isolation; fermer la vanne d'alimentation lorsque la cavité d'isolation est remplie de fluide sous pression; déterminer une défaillance du circuit de drainage en fonction de l'évolution de la pression à l'intérieur de la cavité d'isolation.

Il existe donc un besoin pour une solution permettant de déterminer une défaillance du circuit de drainage.

Pour cela, l'invention propose un procédé de détermination d'une défaillance d'un circuit de drainage selon la revendication 1.

De plus, la configuration du circuit de drainage permet de déterminer une potentielle défaillance même lorsque le drain est obturé, par exemple avant le démarrage de la turbine.

Le circuit de drainage peut aussi comporter une ou plusieurs des caractéristiques suivantes prises dans toute combinaison techniquement admissible.

Selon l'invention, le dispositif de détermination d'une défaillance comprend au moins un capteur pour déterminer la pression à l'intérieur de la cavité d'isolation.

Selon un mode de réalisation du procédé de détermination, le dispositif de détermination d'une défaillance peut comprendre en outre un contrôleur configuré pour contrôler l'ouverture ou la fermeture sélective d'au moins l'une parmi les première et deuxième vannes d'isolation, la vanne d'alimentation et la vanne d'évacuation.

Selon un mode de réalisation du procédé de détermination, le drain peut être incliné par rapport à un axe horizontal de manière à faire s'écouler ledit au moins un fluide combustible par gravité à l'intérieur du drain.

Selon un mode de réalisation du procédé de détermination, la conduite d'évacuation peut déboucher au niveau de la première moitié de la cavité d'isolation par rapport au sens d'écoulement dudit au moins un fluide combustible au travers du drain.

Selon un mode de réalisation du procédé de détermination, le circuit de drainage peut comprendre en outre une vanne additionnelle d'alimentation disposée dans la conduite d'alimentation pour isoler une portion de la conduite d'alimentation entre la vanne d'alimentation et la vanne additionnelle d'alimentation, et un capteur pour déterminer la pression à l'intérieur de la portion de la conduite d'alimentation.

Selon un mode de réalisation du circuit de drainage, le circuit de drainage peut comprendre en outre une vanne additionnelle d'évacuation disposée dans la conduite d'évacuation pour isoler une portion de la conduite d'évacuation entre la vanne d'évacuation et la vanne additionnelle d'évacuation, et un capteur pour déterminer la pression à l'intérieur de la portion de la conduite d'évacuation.

Selon un mode de réalisation du procédé de détermination, les étapes de fermeture des première et deuxième vannes d'isolation, d'ouverture de la vanne d'alimentation, le cas échéant d'ouverture de la vanne d'évacuation, le cas échéant de fermeture de la vanne d'évacuation, de fermeture de la vanne d'alimentation, d'ouverture de l'une parmi les première et deuxième vannes d'isolation et de détermination d'une défaillance peuvent être successivement mises en œuvre une première fois pour déterminer une défaillance du circuit de drainage lors de l'ouverture de la première vanne d'isolation et une deuxième fois pour déterminer une défaillance du circuit de drainage lors de l'ouverture de la deuxième vannes d'isolation, la première vanne d'isolation étant fermée entre les première et deuxième mises en œuvre.

Selon un mode de réalisation du procédé de détermination, l'étape de détermination d'une défaillance peut comprendre :
déterminer une valeur de référence de pression correspondant à la pression à l'intérieur de la cavité d'isolation après la fermeture de la vanne d'alimentation,
déterminer une durée écoulée entre l'ouverture de ladite première ou deuxième vanne d'isolation et le moment où la pression à l'intérieur de la cavité d'isolation atteint une valeur prédéterminée de pression.
déterminer une défaillance du circuit de drainage en fonction de ladite durée écoulée.

Selon un mode de réalisation du procédé de détermination, une défaillance correspondant à un défaut d'ouverture de ladite première ou deuxième vanne d'isolation peut être déterminée si la durée écoulée est supérieure ou égale à une durée prédéterminée.

Selon un mode de réalisation du procédé de détermination, le circuit de drainage comprend en outre une vanne additionnelle d'alimentation disposée dans la conduite d'alimentation pour isoler une portion de la conduite d'alimentation entre la vanne d'alimentation et la vanne additionnelle d'alimentation, et un capteur pour déterminer la pression à l'intérieur de la portion de la conduite d'alimentation.

Dans ce mode de réalisation :
l'étape d'ouverture de la vanne d'alimentation peut comprendre en outre l'ouverture de la vanne additionnelle d'alimentation,.
l'étape de fermeture de la vanne d'alimentation peut comprendre en outre la fermeture de la vanne additionnelle d'alimentation lorsque la cavité d'isolation est remplie de fluide sous pression, et
le procédé peut comprendre en outre les étapes suivantes lorsque les première et deuxième vannes d'isolation, la vanne d'alimentation et la vanne additionnelle d'alimentation sont fermées :
   déterminer une défaillance de la vanne d'alimentation en fonction de l'évolution de la pression à l'intérieur de la portion de la conduite d'alimentation.

Selon un mode de réalisation du procédé de détermination, le circuit de drainage comprenant en outre une vanne additionnelle d'évacuation disposée dans la conduite d'évacuation pour isoler une portion de la conduite d'évacuation entre la vanne d'évacuation et la vanne additionnelle d'évacuation, et un capteur pour déterminer la pression à l'intérieur de la portion de la conduite d'évacuation.

Dans ce mode de réalisation :
l'étape d'ouverture de la vanne d'évacuation peut comprendre en outre l'ouverture de la vanne additionnelle d'évacuation,
l'étape de fermeture de la vanne d'évacuation peut comprendre en outre la fermeture de la vanne additionnelle d'évacuation,
le procédé peut comprendre en outre les étapes suivantes lorsque les première et deuxième vannes d'isolation, la vanne d'alimentation et la vanne additionnelle d'alimentation sont fermées :
   déterminer une défaillance de la vanne d'évacuation en fonction de l'évolution de la pression à l'intérieur de la portion de la conduite d'évacuation.

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier. L'invention n'est pas limitée aux modes de réalisation illustrés dans les dessins.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

Les dessins annexés illustrent l'invention :
La figure 1 représente schématiquement un premier mode de réalisation d'un circuit de drainage d'une ou plusieurs cavités d'une turbine.
La figure 2 représente schématiquement un deuxième mode de réalisation d'un circuit de drainage d'une ou plusieurs cavités d'une turbine.

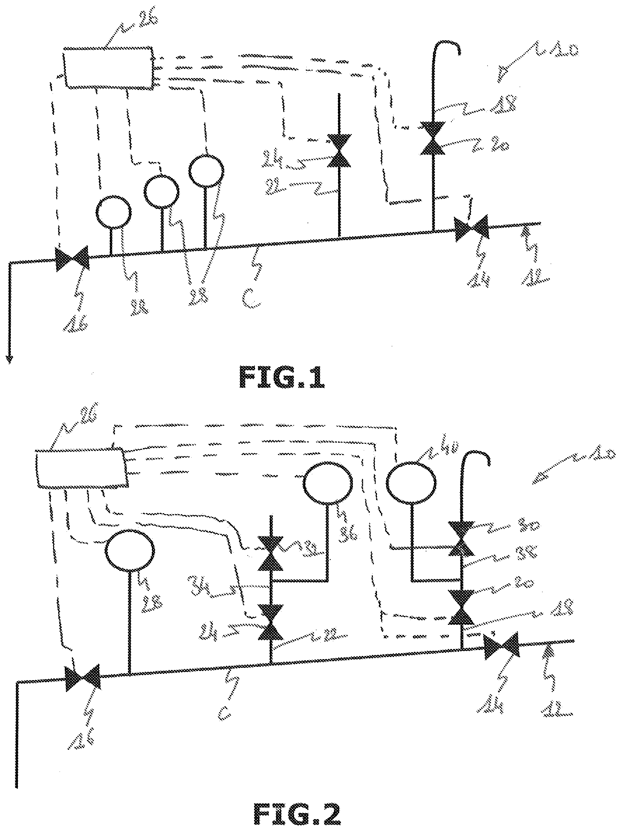

Un premier mode de réalisation d'un circuit de drainage 10 est présenté en figure 1. Le circuit de drainage 10 permet le drainage d'au moins un fluide combustible provenant d'au moins une cavité d'une turbine, notamment à gaz. De manière préférée, la turbine à gaz comprend une pluralité de chambres de combustion. Le fluide combustible est de préférence du fioul liquide.

Le fluide combustible est mélangé à de l'air comprimé à l'intérieur de la chambre de combustion pour être brûlé. Le gaz issu de cette combustion entraîne une turbine permettant ainsi de convertir l'énergie cinétique liée à la détente rapide du gaz en énergie mécanique exploitable au niveau d'un arbre de sortie.

Comme décrit précédemment, le circuit de drainage 10 permet d'évacuer une cavité, par exemple la chambre de combustion, le fluide combustible non brûlé, par exemple en cas de défaillance d'allumage de la turbine à gaz. De manière préférée, le circuit de drainage 10 est un circuit accessoire et donc indépendant de la cavité. En d'autres termes, le circuit de drainage 10 ne comprend pas ladite au moins une cavité de la turbine mais est configuré pour être en communication de fluide avec au moins l'une d'elles pour recueillir un fluide provenant d'au moins l'une de ces cavités.

Le circuit de drainage 10 comprend un drain 12 destiné à être en communication de fluide avec ladite au moins une cavité (non visible). Le drain 12 est de préférence incliné par rapport à un axe horizontal de manière à faire s'écouler ledit au moins un fluide combustible par gravité à l'intérieur du drain 12. Ainsi, le fluide combustible évacué de la cavité est éloigné plus aisément de la zone de haute température ce qui limite les risques d'auto inflammation du fluide combustible.

Le circuit de drainage 10 comprend également une première 14 et une deuxième 16 vannes d'isolation délimitant entre elles une cavité d'isolation C. Cette cavité d'isolation C correspond à une portion du drain 12 entre les première 14 et une deuxième 16 vannes d'isolation. Les première 14 et deuxième 16 vannes d'isolation sont disposées en série le long du drain 12. De plus, la première vanne d'isolation 14 est disposée en amont de la deuxième vanne d'isolation 16 par rapport au sens d'écoulement dudit au moins un fluide combustible au travers du drain 12. Ainsi, lorsque le drain 12 est incliné par rapport à l'horizontal, la première vanne d'isolation 14 est en position haute et la deuxième vanne d'isolation 16 est en position basse.

Le circuit de drainage 10 comprend également une conduite d'alimentation 22 en fluide sous pression. La conduite d'alimentation 22 est en communication de fluide avec la cavité d'isolation C pour permettre l'alimentation en fluide sous pression de la cavité d'isolation C. La conduite d'alimentation 22 est destinée à être raccordée à une source (non visible) en fluide sous pression. Le fluide sous pression est de préférence de l'eau. Une vanne d'alimentation 24 est disposée dans la conduite d'alimentation 22 pour permettre de réguler l'alimentation de la cavité d'isolation C en fluide sous pression. La cavité d'isolation C peut ainsi être sélectivement remplie de fluide à une pression souhaitée. Ceci est particulièrement utile pour tester le bon fonctionnement ou l'étanchéité de l'une au moins des vannes du circuit de drainage 10 ou son obstruction.

Le circuit de drainage 10 comprend en outre une conduite d'évacuation 18 pour permettre l'évacuation de l'air de la cavité d'isolation C. La conduite d'évacuation 18 peut être un évent connecté de la cavité d'isolation C. La conduite d'évacuation 18 débouche de préférence au niveau de la première moitié de la cavité d'isolation C par rapport au sens d'écoulement dudit au moins un fluide combustible au travers du drain 12. En d'autres termes, la conduite d'évacuation 18 débouche à proximité de la première vanne d'isolation 14. Cette position haute de la vanne d'évacuation 18 permet à l'air ou un gaz inerte de s'échapper de la cavité d'isolation C lorsque celle-ci est remplie de fluide sous pression. Une vanne d'évacuation 20 est disposée dans la conduite d'évacuation 18 pour permettre de réguler l'évacuation de l'air hors de la cavité d'isolation C.

Les vannes d'évacuation 20 et d'alimentation 24 ainsi que les première et deuxième vannes d'isolation peuvent être configurées de sorte que leur ouverture et leur fermeture est régulée manuellement ou automatiquement. De manière préférée, l'ensemble des vannes du circuit de drainage 10 sont configurées pour être commandées automatiquement par un contrôleur 26 pour obtenir une ouverture/fermeture sélectivement activable de chacune d'entre elles.

Le circuit de drainage 10 comprend également un dispositif de détermination d'une défaillance 26 du circuit de drainage 10. En particulier, le dispositif de détermination 26 est configuré pour mettre en œuvre une séquence de test de la première vanne 14 ou de la deuxième vannes 16 à l'aide de l'alimentation en fluide sous pression. En obturant la cavité d'isolation C puis en la remplissant de fluide sous pression, le dispositif de détermination d'une défaillance 26 permet de détecter une défaillance d'une ou plusieurs vannes de la cavité d'isolation C ou une obturation du drain 12 en fonction de l'évolution de la pression à l'intérieur de la cavité d'isolation C. Pour cela, le dispositif de détermination d'une défaillance 26 comprend de préférence au moins un capteur 28 configuré pour déterminer la pression à l'intérieur de la cavité d'isolation C. De manière alternative, le dispositif de détermination d'une défaillance 26 peut comprendre un ou plusieurs capteurs 28 permettant de déterminer la pression à l'intérieur de la cavité d'isolation C, notamment pour obtenir une redondance de mesure.

On entend par « défaillance » du circuit de drainage 10, le dysfonctionnement d'ouverture ou de fermeture d'une vanne de ce circuit de drainage et/ou une obstruction totale ou partielle du drain 12.

Pour permettre le contrôle de l'ouverture/fermeture des vannes du circuit de drainage 10, le dispositif de détermination d'une défaillance 26 comprend de préférence un contrôleur configuré pour contrôler l'ouverture ou la fermeture sélective d'au moins l'une parmi les première 14 et deuxième 16 vannes d'isolation, la vanne d'alimentation 24 et la vanne d'évacuation 20. De préférence, le contrôleur est configuré pour contrôler l'ouverture ou la fermeture sélective de l'ensemble des vannes du circuit de drainage 10. De plus, le contrôleur est configuré pour contrôler l'ouverture ou la fermeture sélective des vannes indépendamment les unes des autres. Le contrôleur est en outre configuré pour recevoir les valeurs de pression déterminées par le ou les capteurs 28.

La séquence de test ou détermination d'une défaillance du circuit de drainage 10 est de préférence réalisée suivant le procédé suivant. Ce procédé est mis en œuvre alors que la turbine à gaz est à l'arrêt. De plus, le procédé est de préférence mis en œuvre avant le démarrage de la turbine à gaz de manière à vérifier le bon fonctionnement du circuit de drainage 10. Les étapes suivantes d'ouverture ou de fermeture de vannes peuvent être réalisées en tout ou partie manuellement ou, de manière préférée, automatiquement par le contrôleur du dispositif de détermination d'une défaillance 26.

A l'état initial, ou opérationnel, du circuit de drainage 10, les première 14 et deuxième 16 vannes d'isolation sont généralement ouvertes. Les première 14 et deuxième 16 vannes d'isolation sont donc tout d'abord fermées pour isoler la cavité d'isolation C du reste du drain 12.

La vanne d'alimentation 24 est ensuite ouverte pour injecter du fluide sous pression à l'intérieur de la cavité d'isolation C. La vanne d'évacuation 20 est de préférence ouverte simultanément ou après la vanne d'alimentation 24 de manière à permettre l'évacuation de l'air lors de l'injection du fluide sous pression à l'intérieur de la cavité d'isolation C.

Lorsque la cavité d'isolation C est remplie de fluide sous pression, la vanne d'alimentation 24 est fermée. La vanne d'évacuation 20 est fermée simultanément à la fermeture de la vanne d'alimentation 24. De manière alternative, la vanne d'évacuation 20 peut être fermée peu de temps avant la fermeture de la vanne d'alimentation 24. La cavité d'isolation C est considérée comme remplie lorsque la pression à l'intérieur de la cavité d'isolation C atteint une pression cible. Cette pression cible peut être mesurée à l'aide du capteur 28 disposé dans la cavité d'isolation C.

Lorsque les vannes d'alimentation 24 et d'évacuation 20 sont fermées, la pression à l'intérieur de la cavité d'isolation est déterminée. Cette pression est considérée comme étant une valeur de référence de pression.

L'une parmi les première 14 et deuxième 16 vannes d'isolation est ensuite ouverte. Pour des raisons de clarté, on considèrera ci-après que la première vanne d'isolation 14 est ouverte. Une défaillance potentielle de la première vanne d'isolation 14 est ensuite déterminée en fonction de l'évolution de la pression à l'intérieur de la cavité d'isolation C, lors de l'ouverture de la première vanne d'isolation 14. De manière préférée, le dispositif de détermination d'une défaillance 26 détermine la durée écoulée entre l'ouverture de la première vanne d'isolation 14 et le moment où la pression à l'intérieur de la cavité d'isolation C atteint une valeur prédéterminée de pression. Une défaillance de la première vanne d'isolation 14 peut ainsi être déterminée en fonction de cette durée écoulée.

Ainsi, si la durée écoulée pour que la pression à l'intérieur de la cavité d'isolation C atteigne la pression prédéterminée est égale ou inférieure à une durée seuil, la première vanne d'isolation 14 est considérée non défaillante. A contrario, si la durée écoulée pour que la pression à l'intérieur de la cavité d'isolation C atteigne la pression prédéterminée est supérieure à une durée seuil, une défaillance est déterminée. Cette défaillance peut correspondre à un défaut d'ouverture de la première vanne d'isolation 14 ou à une obturation du drain 12 en amont de la première vanne d'isolation 14. De manière similaire, lorsque la deuxième vanne d'isolation 16 est ouverte à la place de la première vanne d'isolation 14 après la détermination de la pression de référence, les constations faites pour la première vanne d'isolation 14 s'appliquent mutatis mutandis à la deuxième vanne d'isolation 16. En particulier, la défaillance déterminée peut correspondre à un défaut d'ouverture de la deuxième vanne d'isolation 16 ou à une obturation du drain 12 en aval de la deuxième vanne d'isolation 16.

De manière générale, le drain 12 présente une pression interne correspondant à la pression atmosphérique lorsque les première 14 et deuxième 16 vannes d'isolation sont ouvertes. Dans ce cas, la valeur prédéterminée de pression correspond à la pression atmosphérique. En d'autres termes, la durée écoulée correspond à la durée mise par la pression à l'intérieur de la cavité d'isolation C pour atteindre la pression atmosphérique après ouverture de la vanne.

Cette séquence de test de la première vanne d'isolation 14 peut être appliquée indifféremment à la première 14 ou à la deuxième 16 vanne d'isolation. De manière préférée, le procédé est mis en œuvre au moins deux fois successives pour déterminer une défaillance du circuit de drainage 10 dans le cas de l'ouverture de la première vanne d'isolation 14 puis de la deuxième vanne d'isolation 16.

Ainsi, entre deux mises en œuvre du procédé, la première vanne d'isolation 14 est fermée une fois l'étape de détermination d'une défaillance réalisée. La vanne d'alimentation 24 est à nouveau ouverte conjointement avec la vanne d'évacuation 20 pour remplir de fluide sous pression la cavité d'isolation C et évacuer l'air de celle-ci. Les vannes d'alimentation 24 et d'évacuation 20 sont ensuite fermées lorsque la pression à l'intérieur de la cavité d'isolation C atteint la pression cible. La valeur de référence de pression est déterminée et la deuxième vanne d'isolation 16 est ensuite ouverte pour pouvoir déterminer une potentielle défaillance de celle-ci. La détermination d'une défaillance de la deuxième vanne d'isolation 16 ou d'une obturation du drain 12 est réalisée de la même façon que celle décrite ci-avant pour la première vanne d'isolation 14.

A l'issue du procédé de détermination d'une défaillance, les première 14 et deuxième 16 vannes d'isolation sont ouvertes de manière à mettre le circuit de drainage 10 dans un état opérationnel, i.e. un état dans lequel le fluide combustible non brûlé est évacué au travers du drain 12, pour éventuellement démarrer la turbine à gaz.

De manière préférée, le dispositif de détermination d'une défaillance 26 transmet à un organe de commande de la turbine à gaz une information représentative du bon fonctionnement ou de la défaillance du circuit de drainage 10. Ainsi, la mise en marche de la turbine peut être déterminée en fonction de l'état du circuit de drainage 10. Une alarme ou un indicateur visuel peuvent également être déclenchés lorsque le circuit de drainage 10 est déterminé comme défaillant.

Un deuxième mode de réalisation d'un circuit de drainage 10 est présenté en figure 2. Le circuit de drainage 10 du deuxième mode de réalisation diffère du circuit de drainage 10 du premier mode de réalisation en ce qu'une vanne additionnelle d'évacuation 30 et une vanne additionnelle d'alimentation 32 sont respectivement ajoutées aux conduites d'évacuation 18 et d'alimentation 22.

La vanne additionnelle d'alimentation 32 est disposée dans la conduite d'alimentation 22 pour isoler une portion de la conduite d'alimentation 34 entre la vanne d'alimentation 24 et la vanne additionnelle d'alimentation 32. Un premier capteur additionnel 36 permet de déterminer la pression à l'intérieur de la portion de la conduite d'alimentation 34. De manière similaire, la vanne additionnelle d'évacuation 30 disposée dans la conduite d'évacuation 18 pour isoler une portion de la conduite d'évacuation 38 entre la vanne d'évacuation 20 et la vanne additionnelle d'évacuation 30. Un deuxième capteur additionnel 40 permet de déterminer la pression à l'intérieur de la portion de la conduite d'évacuation 38.

La vanne d'évacuation 20 est disposée entre la vanne additionnelle d'évacuation 30 et la cavité d'isolation C. De manière similaire, la vanne d'alimentation 24 est disposée entre la vanne additionnelle d'alimentation 32 et la cavité d'isolation C.

Cet arrangement formant deux portions isolées dans les conduites d'alimentation 22 et d'évacuation 18 dans lesquelles la pression peut être déterminée permet de tester le bon fonctionnement des vannes d'alimentation 24 et d'évacuation 20. En d'autres termes, la possibilité de déterminer l'évolution de la pression en amont et en aval des vannes d'alimentation 24 et d'évacuation 20 permet de déterminer une potentielle défaillance de ces vannes lors d'un remplissage de la cavité d'isolation C tel que mis en œuvre dans le procédé décrit ci-avant. En effet, une variation de pression entre les portions de la conduite d'alimentation 34 et de la conduite d'évacuation 38 permet de déterminer si l'une ou plusieurs des vannes d'alimentation 24 et d'évacuation 20 présentent une défaillance. Notamment, si la pression déterminée par le capteur 28 et les premiers 36 et deuxième 40 capteurs additionnels est stable lorsque la cavité d'isolation C est mise à la pression de référence, alors les première 14 et deuxième 16 vannes d'isolation ainsi que les vannes d'alimentation 24 et d'évacuation 20 sont bien étanches. Si seule la pression à l'intérieur de la cavité d'isolation C diminue, alors une défaillance de la première vanne 14 et/ou de la deuxième vanne d'isolation 16 est déterminée par la méthode du premier mode de réalisation.

Le contrôleur du dispositif de détermination d'une défaillance 26 est également configuré pour contrôler l'ouverture ou la fermeture sélective des vannes additionnelles d'alimentation 32 et d'évacuation 30. Le contrôleur est en outre configuré pour recevoir les valeurs de pression déterminées par les premier 36 et deuxième 40 capteurs additionnels.

Pour la mise en œuvre du deuxième mode de réalisation, le procédé décrit ci-avant peut être mis en œuvre de manière identique avec les adaptations suivantes : l'étape d'ouverture de la vanne d'alimentation 24 comprend en outre l'ouverture de la vanne additionnelle d'alimentation 32 et l'étape de fermeture de la vanne d'alimentation 24 comprend en outre la fermeture de la vanne additionnelle d'alimentation 32 lorsque la cavité d'isolation C est remplie de fluide sous pression. De manière similaire, l'étape d'ouverture de la vanne d'évacuation 20 comprend en outre l'ouverture de la vanne additionnelle d'évacuation 30 et l'étape de fermeture de la vanne d'évacuation 20 comprend en outre la fermeture de la vanne additionnelle d'évacuation 30.

La détermination du bon fonctionnement de la vanne d'alimentation 24 ou de la vanne d'évacuation 20 peut être réalisée en fonction de l'évolution de la pression à l'intérieur de la portion de la conduite d'alimentation 34 et de la portion de la conduite d'évacuation 38, respectivement. Comme indiqué ci-avant, si la pression déterminée par le capteur 28 et les premiers 36 et deuxième 40 capteurs additionnels est stable lorsque la cavité d'isolation C est mise à la pression de référence, alors les vannes d'alimentation 24 et d'évacuation 20 sont considérées comme étant bien étanches.

## Revendications

1. Procédé de détermination d'une défaillance pour un circuit de drainage (10) d'au moins un fluide combustible pour au moins une cavité d'une turbine, ledit circuit de drainage comprenant :
- un drain (12) en communication de fluide avec ladite au moins une cavité,
- une première (14) et une deuxième (16) vannes d'isolation délimitant entre elles une cavité d'isolation (C) d'une portion du drain,
- une conduite d'évacuation (18) en communication de fluide avec la cavité d'isolation (C) pour permettre l'évacuation d'air hors de la cavité d'isolation (C),
- une conduite d'alimentation (22) pour permettre l'alimentation en fluide sous pression de la cavité d'isolation (C),
- une vanne d'alimentation (24) disposée dans la conduite d'alimentation (22) pour réguler l'alimentation de la cavité d'isolation (C) en fluide sous pression,
- une vanne d'évacuation (20) disposée dans la conduite d'évacuation (18) pour réguler l'évacuation des gaz hors de la cavité d'isolation (C), et
- un dispositif de détermination d'une défaillance (26) du circuit de drainage (10) comprenant au moins un capteur (28) pour déterminer la pression à l'intérieur de la cavité d'isolation (C)
ledit procédé comprenant les étapes suivantes :
- fermer les première (14) et deuxième (16) vannes d'isolation pour isoler la cavité d'isolation (C) du reste du drain (12) ;
- ouvrir la vanne d'alimentation (24) pour injecter du fluide sous pression à l'intérieur de la cavité d'isolation (C) ;
- ouvrir la vanne d'évacuation (20) de manière à permettre l'évacuation de gaz lors de l'injection du fluide sous pression à l'intérieur de la cavité d'isolation (C),
- fermer la vanne d'alimentation (24) lorsque la cavité d'isolation (C) est remplie de fluide sous pression ;
- fermer la vanne d'évacuation (20) ;
- ouvrir l'une parmi les première (14) et deuxième (16) vannes d'isolation ;
- déterminer une défaillance du circuit de drainage (10) en fonction de l'évolution de la pression à l'intérieur de la cavité d'isolation (C) lors de l'ouverture de ladite première (14) ou deuxième (16) vanne d'isolation.

2. Procédé de détermination d'une défaillance selon la revendication 1, dans lequel le dispositif de détermination d'une défaillance (26) comprend en outre un contrôleur configuré pour contrôler l'ouverture ou la fermeture sélective d'au moins l'une parmi les première (14) et deuxième (16) vannes d'isolation, la vanne d'alimentation (24) et la vanne d'évacuation (20).

3. Procédé de détermination d'une défaillance selon la revendication 1 ou 2, dans lequel le drain (12) est incliné par rapport à un axe horizontal de manière à faire s'écouler ledit au moins un fluide combustible par gravité à l'intérieur du drain (12).

4. Procédé de détermination d'une défaillance selon l'une quelconque des revendications précédentes, dans lequel la conduite d'évacuation (18) débouche au niveau de la première moitié de la cavité d'isolation (C) par rapport au sens d'écoulement dudit au moins un fluide combustible au travers du drain (12).

5. Procédé de détermination d'une défaillance selon l'une quelconque des revendications précédentes, dans lequel ledit circuit de drainage (10) comprend en outre une vanne additionnelle d'alimentation (32) disposée dans la conduite d'alimentation (22) pour isoler une portion de la conduite d'alimentation (34) entre la vanne d'alimentation (24) et la vanne additionnelle d'alimentation (32), et un capteur (36) pour déterminer la pression à l'intérieur de la portion de la conduite d'alimentation (34).

6. Procédé de détermination d'une défaillance selon l'une quelconque des revendications précédentes, dans lequel ledit circuit de drainage (10) comprend en outre une vanne additionnelle d'évacuation (30) disposée dans la conduite d'évacuation (18) pour isoler une portion de la conduite d'évacuation (38) entre la vanne d'évacuation (20) et la vanne additionnelle d'évacuation (30), et un capteur (40) pour déterminer la pression à l'intérieur de la portion de la conduite d'évacuation (38).

7. Procédé de détermination selon l'une quelconque des revendications précédentes, dans lequel les étapes de fermeture des première (14) et deuxième (16) vannes d'isolation, d'ouverture de la vanne d'alimentation (24), le cas échéant d'ouverture de la vanne d'évacuation (20), le cas échéant de fermeture de la vanne d'évacuation (20), de fermeture de la vanne d'alimentation (24), d'ouverture de l'une parmi les première (14) et deuxième (16) vannes d'isolation et de détermination d'une défaillance sont successivement mises en œuvre une première fois pour déterminer une défaillance du circuit de drainage (10) lors de l'ouverture de la première vanne d'isolation (14) et une deuxième fois pour déterminer une défaillance du circuit de drainage (10) lors de l'ouverture de la deuxième vannes d'isolation (16), la première vanne d'isolation (14) étant fermée entre les première et deuxième mises en œuvre.

8. Procédé de détermination selon l'une quelconque des revendications précédentes, dans lequel l'étape de détermination d'une défaillance comprend :
- déterminer une valeur de référence de pression correspondant à la pression à l'intérieur de la cavité d'isolation (C) après la fermeture de la vanne d'alimentation (24),
- déterminer une durée écoulée entre l'ouverture de ladite première (14) ou deuxième (16) vanne d'isolation et le moment où la pression à l'intérieur de la cavité d'isolation (C) atteint une valeur prédéterminée de pression,
- déterminer une défaillance du circuit de drainage (10) en fonction de ladite durée écoulée.

9. Procédé de détermination selon la revendication 8, dans laquelle une défaillance correspondant à un défaut d'ouverture de ladite première (14) ou deuxième (16) vanne d'isolation est déterminée si la durée écoulée est supérieure ou égale à une durée prédéterminée.

10. Procédé de détermination selon l'une quelconque des revendications précédentes, le circuit de drainage (10) comprenant en outre une vanne additionnelle d'alimentation (32) disposée dans la conduite d'alimentation (22) pour isoler une portion de la conduite d'alimentation (34) entre la vanne d'alimentation (24) et la vanne additionnelle d'alimentation (32), et un capteur (36) pour déterminer la pression à l'intérieur de la portion de la conduite d'alimentation (34), dans lequel :
l'étape d'ouverture de la vanne d'alimentation (24) comprend en outre l'ouverture de la vanne additionnelle d'alimentation (32),
l'étape de fermeture de la vanne d'alimentation (24) comprend en outre la fermeture de la vanne additionnelle d'alimentation (32) lorsque la cavité d'isolation (C) est remplie de fluide sous pression, et
le procédé comprend en outre les étapes suivantes lorsque les première (14) et deuxième (16) vannes d'isolation, la vanne d'alimentation (24) et la vanne additionnelle d'alimentation (32) sont fermées :
- déterminer une défaillance de la vanne d'alimentation (24) en fonction de l'évolution de la pression à l'intérieur de la portion de la conduite d'alimentation (34).

11. Procédé de détermination selon l'une quelconque des revendications précédentes, le circuit de drainage (10) comprenant en outre une vanne additionnelle d'évacuation (30) disposée dans la conduite d'évacuation (18) pour isoler une portion de la conduite d'évacuation (38) entre la vanne d'évacuation (20) et la vanne additionnelle d'évacuation (30), et un capteur (40) pour déterminer la pression à l'intérieur de la portion de la conduite d'évacuation (38), dans lequel :
l'étape d'ouverture de la vanne d'évacuation (20) comprend en outre l'ouverture de la vanne additionnelle d'évacuation (30),
l'étape de fermeture de la vanne d'évacuation (20) comprend en outre la fermeture de la vanne additionnelle d'évacuation (30), et le procédé comprend en outre les étapes suivantes lorsque les première (14) et deuxième (16) vannes d'isolation, la vanne d'alimentation (24), la vanne d'évacuation (20) et la vanne additionnelle d'évacuation (30) sont fermées :
- déterminer une défaillance de la vanne d'évacuation (20) en fonction de l'évolution de la pression à l'intérieur de la portion de la conduite d'évacuation (38).

## Patentansprüche

1. Verfahren zum Bestimmen eines Fehlers für einen Drainagekreislauf (10) für mindestens ein brennbares Fluid für mindestens einen Hohlraum einer Turbine, wobei der Drainagekreislauf Folgendes umfasst:
- einen Abfluss (12), der in Fluidverbindung mit dem mindestens einen Hohlraum steht,
- ein erstes (14) und ein zweites (16) Absperrventil, das einen Isolationshohlraum (C) eines Abflussabschnitts dazwischen begrenzt,
- eine Ablassleitung (18), die in Fluidverbindung mit dem Isolationshohlraum (C) steht, um das Ablassen von Luft aus dem Isolationshohlraum (C) zu ermöglichen,
- eine Versorgungsleitung (22), um die Versorgung des Isolationshohlraums (C) mit unter Druck stehendem Fluid zu ermöglichen,
- ein Versorgungsventil (24), das in der Versorgungsleitung (22) angeordnet ist, um die Versorgung des Isolationshohlraums (C) mit unter Druck stehendem Fluid zu regeln,
- ein Ablassventil (20), das in der Ablassleitung (18) angeordnet ist, um das Ablassen von Gasen aus dem Isolationshohlraum (C) zu regeln, und
- eine Vorrichtung zum Bestimmen eines Fehlers (26) des Drainagekreislaufs (10), die mindestens einen Sensor (28) zum Bestimmen des Drucks innerhalb des Isolationshohlraums (C) umfasst, wobei das Verfahren die folgenden Schritte umfasst:
- Schließen des ersten (14) und des zweiten (16) Absperrventils, um den Isolationshohlraum (C) vom Rest des Abflusses (12) zu isolieren;
- Öffnen des Versorgungsventils (24), um unter Druck stehendes Fluid in den Isolationshohlraum (C) einzuspritzen;
- Öffnen des Ablassventils (20), derart, dass das Gas beim Einspritzen des unter Druck stehenden Fluids in den Isolationshohlraum (C) abgelassen werden kann,
- Schließen des Versorgungsventils (24), wenn der Isolationshohlraum (C) mit unter Druck stehendem Fluid gefüllt ist;
- Schließen des Ablassventils (20);
- Öffnen eines von dem ersten (14) und dem zweiten (16) Absperrventil;
- Bestimmen eines Fehlers des Drainagekreislaufs (10) in Abhängigkeit von der Druckentwicklung innerhalb des Isolationshohlraums (C) beim Öffnen des ersten (14) oder des zweiten (16) Absperrventils.

2. Verfahren zum Bestimmen eines Fehlers nach Anspruch 1, wobei die Vorrichtung zum Bestimmen eines Fehlers (26) ferner eine Steuerung umfasst, die so eingerichtet ist, dass sie das selektive Öffnen oder Schließen mindestens eines von dem ersten (14) und dem zweiten (16) Absperrventil, dem Versorgungsventil (24) und dem Ablassventil (20) steuert.

3. Verfahren zum Bestimmen eines Fehlers nach Anspruch 1 oder 2, wobei der Abfluss (12) gegenüber einer horizontalen Achse geneigt ist, so dass das mindestens eine brennbare Fluid durch Schwerkraft innerhalb des Abflusses (12) fließt.

4. Verfahren zum Bestimmen eines Fehlers nach einem der vorhergehenden Ansprüche, wobei die Ablassleitung (18) an der ersten Hälfte des Isolationshohlraums (C) bezogen auf die Strömungsrichtung des mindestens einen brennbaren Fluids durch den Abfluss (12) mündet.

5. Verfahren zum Bestimmen eines Fehlers nach einem der vorhergehenden Ansprüche, wobei der Drainagekreislauf (10) ferner ein zusätzliches Versorgungsventil (32), das in der Versorgungsleitung (22) angeordnet ist, um einen Abschnitt der Versorgungsleitung (34) zwischen dem Versorgungsventil (24) und dem zusätzlichen Versorgungsventil (32) zu isolieren, und einen Sensor (36) umfasst, um den Druck innerhalb des Abschnitts der Versorgungsleitung (34) zu bestimmen.

6. Verfahren zum Bestimmen eines Fehlers nach einem der vorhergehenden Ansprüche, wobei der Drainagekreislauf (10) ferner ein zusätzliches Ablassventil (30), das in der Ablassleitung (18) angeordnet ist, um einen Abschnitt der Ablassleitung (38) zwischen dem Ablassventil (20) und dem zusätzlichen Ablassventil (30) zu isolieren, und einen Sensor (40) umfasst, um den Druck innerhalb des Abschnitts der Ablassleitung (38) zu bestimmen.

7. Bestimmungsverfahren nach einem der vorhergehenden Ansprüche, wobei die Schritte des Schließens des ersten (14) und des zweiten (16) Absperrventils, des Öffnens des Versorgungsventils (24), gegebenenfalls des Öffnens des Ablassventils (20), gegebenenfalls des Schließens des Ablassventils (20), des Schließen des Versorgungsventils (24), des Öffnens eines von dem ersten (14) und dem zweiten (16) Absperrventil und des Bestimmens eines Fehlers nacheinander ein erstes Mal durchgeführt werden, um beim Öffnen des ersten Absperrventils (14) einen Fehler des Drainagekreislaufs (10) zu bestimmen, und ein zweites Mal, um beim Öffnen des zweiten Absperrventils (16) einen Fehler des Drainagekreislaufs (10) zu bestimmen, wobei das erste Absperrventil (14) zwischen dem ersten und dem zweiten Durchführen geschlossen ist.

8. Bestimmungsverfahren nach einem der vorhergehenden Ansprüche, wobei der Schritt des Bestimmens eines Fehlers Folgendes umfasst:
- Bestimmen eines Druckreferenzwerts, der dem Druck innerhalb des Isolationshohlraums (C) nach dem Schließen des Versorgungsventils (24) entspricht,
- Bestimmen einer verstrichenen Zeit zwischen dem Öffnen des ersten (14) oder zweiten (16) Absperrventils und dem Zeitpunkt, zu dem der Druck innerhalb des Isolationshohlraums (C) einen vorbestimmten Druckwert erreicht,
- Bestimmen eines Fehlers des Drainagekreislaufs (10) in Abhängigkeit von der verstrichenen Zeit.

9. Bestimmungsverfahren nach Anspruch 8, wobei ein Fehler, der einem Fehler beim Öffnen des ersten (14) oder zweiten (16) Absperrventils entspricht, bestimmt wird, wenn die verstrichene Zeit größer oder gleich einer vorbestimmten Zeit ist.

10. Bestimmungsverfahren nach einem der vorhergehenden Ansprüche, wobei der Drainagekreislauf (10) ferner ein zusätzliches Versorgungsventil (32), das in der Versorgungsleitung (22) angeordnet ist, um einen Abschnitt der Versorgungsleitung (34) zwischen dem Versorgungsventil (24) und dem zusätzlichen Versorgungsventil (32) zu isolieren, und einen Sensor (36) umfasst, um den Druck innerhalb des Abschnitts der Versorgungsleitung (34) zu bestimmen, wobei:
der Schritt des Öffnens des Versorgungsventils (24) ferner das Öffnen des zusätzlichen Versorgungsventils (32) umfasst,
der Schritt des Schließens des Versorgungsventils (24) ferner das Schließen des zusätzlichen Versorgungsventils (32) umfasst, wenn der Isolationshohlraum (C) mit unter Druck stehendem Fluid gefüllt ist, und das Verfahren ferner die folgenden Schritte umfasst, wenn das erste (14) und das zweite (16) Absperrventil, das Versorgungsventil (24) und das zusätzliche Versorgungsventil (32) geschlossen sind:
- Bestimmen eines Fehlers des Versorgungsventils (24) in Abhängigkeit von der Druckentwicklung innerhalb des Abschnitts der Versorgungsleitung (34).

11. Bestimmungsverfahren nach einem der vorhergehenden Ansprüche, wobei der Drainagekreislauf (10) ferner ein zusätzliches Ablassventil (30), das in der Ablassleitung (18) angeordnet ist, um einen Abschnitt der Ablassleitung (38) zwischen dem Ablassventil (20) und dem zusätzlichen Ablassventil (30) zu isolieren, und einen Sensor (40) umfasst, um den Druck innerhalb des Abschnitts der Ablassleitung (38) zu bestimmen, wobei:
der Schritt des Öffnens des Ablassventils (20) ferner das Öffnen des zusätzlichen Ablassventils (30) umfasst,
der Schritt des Schließens des Ablassventils (20) ferner das Schließen des zusätzlichen Ablassventils (30) umfasst, und das Verfahren ferner die folgenden Schritte umfasst, wenn das erste (14) und das zweite (16) Absperrventil, das Versorgungsventil (24), das Ablassventil (20) und das zusätzliche Ablassventil (30) geschlossen sind:
- Bestimmen eines Fehlers des Ablassventils (20) in Abhängigkeit von der Druckentwicklung innerhalb des Abschnitts der Ablassleitung (38).

## Claims

1. Method for determining a failure for a circuit (10) for draining at least one combustible fluid for at least one cavity of a turbine, said drainage circuit comprising:
- a drain (12) in fluid communication with said at least one cavity,
- a first (14) and a second (16) isolation valve delimiting between them a cavity (C) for isolating a portion of the drain,
- a discharge pipe (18) in fluid communication with the isolation cavity (C) to allow the discharge of air out of the isolation cavity (C),
- a supply pipe (22) to enable the supply of pressurised fluid to the isolation cavity (C),
- a supply valve (24) disposed in the supply pipe (22) to regulate the supply of pressurised fluid to the isolation cavity (C),
- a discharge valve (20) disposed in the discharge pipe (18) to regulate the discharge of the gases out of the isolation cavity (C), and
- a device for determining a failure (26) of the drainage circuit (10) comprising at least one sensor (28) for determining the pressure inside the isolation cavity (C), said method comprising the following steps:
- closing the first (14) and second (16) isolation valves to isolate the isolation cavity (C) from the rest of the drain (12);
- opening the supply valve (24) to inject pressurised fluid inside the isolation cavity (C);
- opening the discharge valve (20) so as to allow the discharge of gas when injecting the pressurised fluid inside the isolation cavity (C),
- closing the supply valve (24) when the isolation cavity (C) is filled with pressurised fluid;
- closing the drain valve (20);
- opening one of the first (14) and second (16) isolation valves;
- determining a failure of the drainage circuit (10) according to the change in the pressure inside the isolation cavity (C) when said first (14) or second (16) isolation valve is opened.

2. Failure determination method according to claim 1, wherein the failure determination device (26) further comprises a controller configured to control the selective opening or closing of at least one of the first (14) and second (16) isolation valves, the supply valve (24), and the discharge valve (20).

3. Failure determination method according to claim 1 or 2, wherein the drain (12) is inclined relative to a horizontal axis so as to make said at least one combustible fluid low by gravity inside the drain (12).

4. Failure determination method according to any one of the preceding claims, wherein the discharge pipe (18) emerges at the first half of the isolation cavity (C) relative to the direction of flow of said at least one combustible fluid through the drain (12).

5. Method for determining a failure according to any one of the preceding claims, wherein said drainage circuit (10) further comprises an additional supply valve (32) disposed in the supply pipe (22) to isolate a portion of the supply pipe (34) between the supply valve (24) and the additional supply valve (32), and a sensor (36) to determine the pressure inside the portion of the supply pipe (34).

6. Failure determination method according to any one of the preceding claims, wherein said drainage circuit (10) further comprises an additional discharge valve (30) disposed in the discharge pipe (18) to isolate a portion of the discharge line (38) between the discharge valve (20) and the additional discharge valve (30), and a sensor (40) to determine the pressure inside the portion of the discharge line (38).

7. Determination method according to any one of the preceding claims, wherein the steps of closing the first (14) and second (16) isolation valves, opening the supply valve (24), if applicable opening the discharge valve (20), if applicable closing the discharge valve (20), closing the supply valve (24), opening one of the first (14) and second (16) isolation and failure-determination valves are successively implemented once to determine a failure of the drainage circuit (10) upon opening the first isolation valve (14) and a second time to determine a failure of the drainage circuit (10) upon opening the second isolation valves (16), the first isolation valve (14) being closed between the first and second implementations.

8. Determination method according to any one of the preceding claims, wherein the failure determination step comprises:
- determining a pressure reference value corresponding to the pressure inside the isolation cavity (C) after closing the supply valve (24),
- determining a time elapsed between the opening of said first (14) or second (16) isolation valve and the moment when the pressure inside the isolation cavity (C) reaches a predetermined pressure value,
- determining a failure of the drainage circuit (10) according to said elapsed time.

9. Determination method according to claim 8, wherein a failure corresponding to a failure to open said first (14) or second (16) isolation valve is determined if the elapsed time is greater than or equal to a predetermined time.

10. Determination method according to any one of the preceding claims, the drainage circuit (10) further comprising an additional supply valve (32) disposed in the supply pipe (22) to isolate a portion of the supply pipe (34) between the supply valve (24) and the additional supply valve (32), and a sensor (36) to determine the pressure inside the portion of the supply pipe (34), wherein:
the step of opening the supply valve (24) further comprises opening the additional supply valve (32),
the step of closing the supply valve (24) further comprises closing the additional supply valve (32) when the isolation cavity (C) is filled with pressurised fluid, and the method further comprises the following steps when the first (14) and second (16) isolation valves, the supply valve (24), and the additional supply valve (32) are closed:
- determining a failure of the supply valve (24) according to the change in the pressure inside the portion of the supply pipe (34).

11. Determination method according to one of the preceding claims, the drainage circuit (10) further comprising an additional discharge valve (30) disposed in the discharge pipe (18) to isolate a portion of the discharge pipe (38) between the discharge valve (20) and the additional discharge valve (30), and a sensor (40) to determine the pressure inside the portion of the discharge line (38), wherein:
the step of opening the discharge valve (20) further comprises opening the additional discharge valve (30),
the step of closing the discharge valve (20) further comprises closing the additional discharge valve (30), and the method further comprises the following steps when the first (14) and second (16) isolation valves, the supply valve (24), the discharge valve (20) and the additional discharge valve (30) are closed:
- determining a failure of the discharge valve (20) according to the change in the pressure inside the portion of the discharge pipe (38).
